# EUROPEAN PATENT APPLICATION

(11) **EP 4 258 377 A1**
(43) Date of publication of application: **11.10.2023**
(21) Application number: 21900491.8
(22) Date of filing: 25.11.2021
(51) Int. Cl.: H01M 4/131, H01M 4/505, H01M 4/525, H01M 4/62

(54) **NON-AQUEOUS ELECTROLYTE SECONDARY BATTERY POSITIVE ELECTRODE AND NON-AQUEOUS ELECTROLYTE SECONDARY BATTERY**

(30) Priority: 04.12.2020 JP 2020202073
(71) Applicant: Panasonic Energy Co., Ltd., Moriguchi-shi, Osaka, 570-8511 (JP)
(72) Inventor: KINOSHITA Masahiro, Kadoma-shi, Osaka 571-0057 (JP); SAWA Shouichiro, Kadoma-shi, Osaka 571-0057 (JP); MORITA Koki, Kadoma-shi, Osaka 571-0057 (JP); IKEDA Tomoki, Kadoma-shi, Osaka 571-0057 (JP)
(74) Representative: Novagraaf International SA
(86) International application number: PCT/JP2021/043267
(87) International publication number: WO 2022/118737

(57) **Abstract**

A non-aqueous electrolyte secondary battery positive electrode (11) that is characterized by comprising a positive electrode collector (40) and a positive electrode mixture layer (42) that is provided on the positive electrode collector (40) and includes a positive electrode active material and a conductive material that includes carbon nanotubes. The non-aqueous electrolyte secondary battery positive electrode (11) is also characterized in that, when the positive electrode mixture layer (42) is bisected in the thickness direction, the mass ratio of carbon nanotubes to positive electrode active material in an upper-half region (42b) that is on a top surface side is smaller than the mass ratio of carbon nanotubes to positive electrode active material in a lower-half region (42a) that is on the positive electrode collector (40) side.

## Description

### TECHNICAL FIELD

The present disclosure relates to a positive electrode for a non-aqueous electrolyte secondary battery and a non-aqueous electrolyte secondary battery.

### BACKGROUND

In recent years, as a secondary battery having high output and high energy density, a non-aqueous electrolyte secondary battery that includes a positive electrode, a negative electrode, and a non-aqueous electrolyte and performs charging and discharging by moving lithium ions and the like between the positive electrode and the negative electrode has been widely used.

For example, Patent Literatures 1 to 3 disclose a non-aqueous electrolyte secondary battery using a positive electrode including a positive electrode mixture layer containing a positive electrode active material and carbon nanotubes as a conductive agent.

### CITATION LIST

### PATENT LITERATURE

Patent Literature 1: WO 2012/114590 A
Patent Literature 2: JP 2019-061734 A
Patent Literature 3: JP 2018-501602 A

### SUMMARY

### TECHNICAL PROBLEM

By adding the carbon nanotubes to the positive electrode mixture layer, electron conductivity of the positive electrode mixture layer can be enhanced, such that a capacity or output of the battery can be improved, but heat generation of the battery during an internal short circuit is increased. In order to suppress the heat generation of the battery during the internal short circuit, it is considered to reduce the amount of carbon nanotubes added, but in this case, the capacity or output of the battery are reduced.

Therefore, an object of the present disclosure is to provide a positive electrode for a non-aqueous electrolyte secondary battery capable of suppressing heat generation of the battery during an internal short circuit while suppressing a reduction in capacity or output of the battery, and a non-aqueous electrolyte secondary battery including the positive electrode for a non-aqueous electrolyte secondary battery.

### SOLUTION TO PROBLEM

According to one aspect of the present disclosure, a positive electrode for a non-aqueous electrolyte secondary battery includes a positive electrode current collector and a positive electrode mixture layer that is provided on the positive electrode current collector and contains a positive electrode active material and a conductive agent, in which the conductive agent contains carbon nanotubes, and in a case where the positive electrode mixture layer is divided into two equal parts in a thickness direction, a mass ratio of the carbon nanotubes to the positive electrode active material contained in an upper half region on a side of a surface is smaller than a mass ratio of the carbon nanotubes to the positive electrode active material contained in a lower half region on a side of the positive electrode current collector.

In addition, according to one aspect of the present disclosure, a non-aqueous electrolyte secondary battery includes a positive electrode, a negative electrode, and a non-aqueous electrolyte, in which the positive electrode is the positive electrode for a non-aqueous electrolyte secondary battery.

### ADVANTAGEOUS EFFECTS OF INVENTION

According to one aspect of the present disclosure, it is possible to suppress heat generation of the battery during an internal short circuit while suppressing a reduction in capacity or output of the battery.

### BRIEF DESCRIPTION OF DRAWINGS

FIG. 1 is a cross-sectional view of a non-aqueous electrolyte secondary battery as an example of an embodiment.
FIG. 2 is a cross-sectional view of a positive electrode as an example of an embodiment.

### DESCRIPTION OF EMBODIMENTS

Examples of embodiments will be described with reference to the drawings. A non-aqueous electrolyte secondary battery of the present disclosure is not limited to embodiments described below. In addition, the drawings referred to in the description of the embodiments are schematically illustrated.

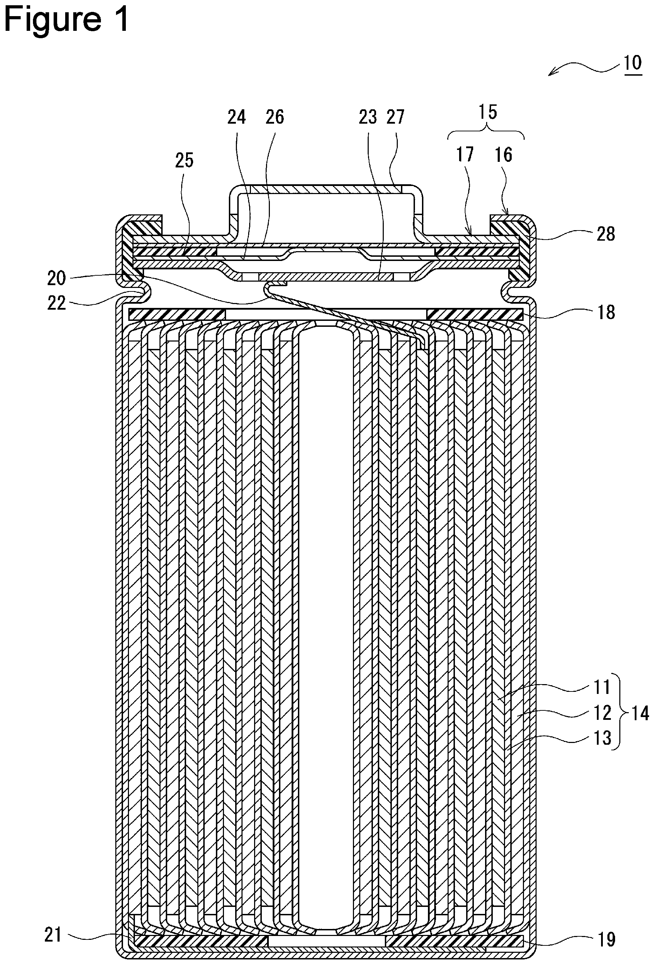

FIG. 1 is a cross-sectional view of a non-aqueous electrolyte secondary battery as an example of an embodiment. A non-aqueous electrolyte secondary battery 10 illustrated in FIG. 1 includes a wound electrode assembly 14 formed by wounding a positive electrode 11 and a negative electrode 12 with a separator 13 interposed between the positive electrode 11 and the negative electrode 12, a non-aqueous electrolyte, insulating plates 18 and 19 that are disposed on upper and lower sides of the electrode assembly 14, respectively, and a battery case 15 housing the members. The battery case 15 includes a bottomed cylindrical case body 16 and a sealing assembly 17 for closing an opening of the case body 16. Instead of the wound electrode assembly 14, another form of an electrode assembly such as a stacked electrode assembly in which a positive electrode and a negative electrode are alternately stacked with a separator interposed therebetween may be applied. In addition, examples of the battery case 15 include a metal outer can having a cylindrical shape, a square shape, a coin shape, a button shape, or the like, and a pouch outer body formed by laminating a resin sheet and a metal sheet.

The case body 16 is, for example, a bottomed cylindrical metal outer can. A gasket 28 is provided between the case body 16 and the sealing assembly 17 to secure a sealing property of the inside of the battery. The case body 16 has, for example, a projecting portion 22 in which a part of a side part thereof projects inside for supporting the sealing assembly 17. The projecting portion 22 is preferably formed in an annular shape along a circumferential direction of the case body 16, and supports the sealing assembly 17 on an upper surface thereof.

The sealing assembly 17 has a structure in which a filter 23, a lower vent member 24, an insulating member 25, an upper vent member 26, and a cap 27 are sequentially stacked from the electrode assembly 14. Each member constituting the sealing assembly 17 has, for example, a disk shape or a ring shape, and the respective members except for the insulating member 25 are electrically connected to each other. The lower vent member 24 and the upper vent member 26 are connected to each other at the respective central parts thereof, and the insulating member 25 is interposed between the respective circumferential parts of the vent members 24 and 26. When the internal pressure of the non-aqueous electrolyte secondary battery 10 is increased by heat generation due to an internal short circuit or the like, for example, the lower vent member 24 is deformed so as to push the upper vent member 26 up toward the cap 27 side and is broken, and thus, a current pathway between the lower vent member 24 and the upper vent member 26 is cut off. When the internal pressure is further increased, the upper vent member 26 is broken, and gas is discharged through the opening of the cap 27.

In the non-aqueous electrolyte secondary battery 10 illustrated in FIG. 1, a positive electrode lead 20 attached to the positive electrode 11 extends through a through-hole of the insulating plate 18 toward a side of the sealing assembly 17, and a negative electrode lead 21 attached to the negative electrode 12 extends through the outside of the insulating plate 19 toward the bottom side of the case body 16. The positive electrode lead 20 is connected to a lower surface of the filter 23 that is a bottom plate of the sealing assembly 17 by welding or the like, and the cap 27 that is a top plate of the sealing assembly 17 electrically connected to the filter 23 becomes a positive electrode terminal. The negative electrode lead 21 is connected to a bottom inner surface of the case body 16 by welding or the like, and the case body 16 becomes a negative electrode terminal.

Hereinafter, each component of the non-aqueous electrolyte secondary battery 10 will be described in detail.

### [Positive Electrode]

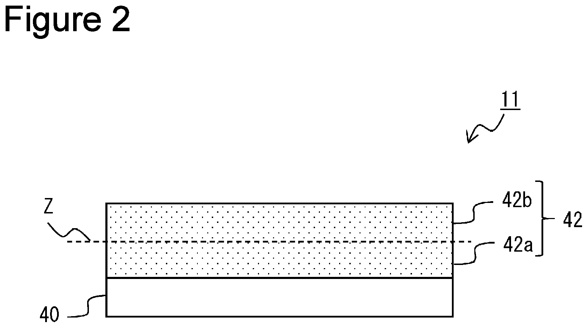

FIG. 2 is a cross-sectional view of a positive electrode as an example of an embodiment. The positive electrode 11 includes a positive electrode current collector 40 and a positive electrode mixture layer 42 provided on the positive electrode current collector 40. As the positive electrode current collector 40, a foil of a metal stable in a potential range of the positive electrode 11, such as aluminum, a film in which the metal is disposed on a surface layer, or the like can be used. The positive electrode mixture layer 42 contains a positive electrode active material and a conductive agent. The conductive agent contains carbon nanotubes. The positive electrode mixture layer 42 preferably contains a binder and the like.

The positive electrode 11 can be manufactured, for example, by applying a positive electrode mixture slurry containing a positive electrode active material, a binder, a conductive agent, and the like onto the positive electrode current collector 40 and drying the positive electrode mixture slurry to form a positive electrode mixture layer 42, and then rolling the positive electrode mixture layer 42 by a rolling roller or the like. A method of manufacturing the positive electrode mixture layer 42 will be described in detail.

In the present embodiment, in a case where the positive electrode mixture layer 42 is divided into two equal parts in a thickness direction as illustrated in FIG. 2, a mass ratio of the carbon nanotubes to the positive electrode active material contained in an upper half region 42b on a side of a surface is smaller than a mass ratio of the carbon nanotubes to the positive electrode active material contained in a lower half region 42a on a side of the positive electrode current collector 40. Here, the phrase "the positive electrode mixture layer 42 is divided into two equal parts in the thickness direction" means that when a lamination direction of the positive electrode current collector 40 and the positive electrode mixture layer 42 is defined as the thickness direction of the positive electrode mixture layer 42, the positive electrode mixture layer 42 is divided in half at the middle Z of a thickness of the positive electrode mixture layer 42. Even in a case where the positive electrode mixture layer 42 is formed on both surfaces of the positive electrode current collector 40, among the two regions obtained by dividing the positive electrode mixture layer 42 into two equal parts in the thickness direction, a region on the side of the positive electrode current collector 40 is defined as the lower half region 42a, and a region on the side of the surface of the positive electrode mixture layer 42 located away from the positive electrode current collector 40 is defined as the upper half region 42b.

In a case where the carbon nanotubes are uniformly present in the positive electrode mixture layer as in the conventional case, the electron conductivity of the positive electrode mixture layer is increased, and thus the capacity or output of the battery are improved, but a short circuit current between the positive electrode and the negative electrode during an internal short circuit is also increased, and the heat generation of the battery is also increased. However, in the present embodiment, since the mass ratio of the carbon nanotubes to the positive electrode active material contained in the upper half region 42b on the side of the surface is small, the electron conductivity of the surface of the positive electrode is lowered, and the short circuit current between the positive electrode and the negative electrode during the internal short circuit can be suppressed, such that the heat generation of the battery during the internal short circuit can be suppressed as compared with the case where the carbon nanotubes are uniformly present in the positive electrode mixture layer 42. In addition, in the present embodiment, since the mass ratio of the carbon nanotubes to the positive electrode active material contained in the lower half region 42a on the side of the positive electrode current collector 40 is large, the resistance between the positive electrode current collector 40 and the positive electrode mixture layer 42 can be suppressed to be low, such that it is possible to suppress a reduction in capacity or output of the battery as compared with the case where the amount of carbon nanotubes added is simply reduced to ensure the safety of the battery.

The mass ratio of the carbon nanotubes to the positive electrode active material contained in the upper half region 42b on the side of the surface is, for example, preferably less than or equal to 0.05 mass%, more preferably less than or equal to 0.03 mass%, and still more preferably 0 mass%, from the viewpoint of suppressing the heat generation of the battery during the internal short circuit.

The mass ratio of the carbon nanotubes to the positive electrode active material contained in the lower half region 42a on the side of the positive electrode current collector 40 is, for example, preferably greater than or equal to 0.01 mass% and less than or equal to 1 mass%, and more preferably greater than or equal to 0.04 mass% and less than or equal to 0.08 mass%, from the viewpoint of suppressing the reduction in capacity or output of the battery.

The mass ratio of the carbon nanotubes to the positive electrode active material contained in the positive electrode mixture layer 42 is, for example, preferably greater than or equal to 0.005 mass% and less than or equal to 0.5 mass%, and more preferably greater than or equal to 0.02 mass% and less than or equal to 0.04 mass%, from the viewpoint of suppressing the reduction in capacity or output of the battery.

Examples of the carbon nanotubes include single-walled carbon nanotubes, double-walled carbon nanotubes, and multi-walled carbon nanotubes. The single-walled carbon nanotube (SWCNT) is a carbon nanostructure in which one layer of graphene sheets forms one cylindrical shape, the double-walled carbon nanotube is a carbon nanostructure in which two layers of graphene sheets are concentrically laminated to form one cylindrical shape, and the multi-walled carbon nanotube is a carbon nanostructure in which three or more layers of graphene sheets are concentrically laminated to form one cylindrical shape. The graphene sheet refers to a layer in which a carbon atom of an sp2 hybrid orbital constituting a crystal of graphite is located at an apex of a regular hexagon. The shape of the carbon nanotube is not limited. Examples of such a shape include various forms including a needle shape, a cylindrical tube shape, a fishbone shape (fishbone or cup lamination type), a trump shape (platelet), and a coil shape.

A fiber length of the carbon nanotube is, for example, preferably greater than or equal to 500 nm and less than or equal to 200 µm and preferably greater than or equal to 1 µm and less than or equal to 100 µm. The fiber length of the carbon nanotube can be determined by measuring lengths of 50 arbitrary carbon nanotubes with a field emission scanning microscope (FE-SEM) and arithmetically averaging the lengths.

The outermost circumference diameter (that is, a fiber diameter) of the carbon nanotube is, for example, preferably greater than or equal to 0.5 nm and less than or equal to 20 nm and more preferably greater than or equal to 1 nm and less than or equal to 10 nm. The outermost circumference diameter of the carbon nanotube can be determined by measuring lengths of 50 arbitrary carbon nanotubes with a field emission scanning microscope (FE-SEM) or a transmission electron microscope (TEM) and arithmetically averaging the lengths.

The conductive agent may contain a particulate conductive agent in addition to the carbon nanotubes. Examples of the particulate conductive agent include carbon materials such as carbon black, acetylene black, Ketjenblack, and graphite. In a case where the particulate conductive agent is used, a primary particle size thereof is preferably greater than or equal to 5 nm and less than or equal to 100 nm, and an aspect ratio is preferably less than 10.

A mass ratio of the particulate conductive agent to the positive electrode active material contained in the upper half region 42b on the side of the surface is preferably greater than or equal to 0.05 mass% and less than or equal to 1.2 mass% from the viewpoint of suppressing the reduction in capacity or output of the battery, and a mass ratio of the particulate conductive agent to the positive electrode active material contained in the lower half region 42a on the side of the positive electrode current collector 40 is preferably less than or equal to 0.5 mass% and more preferably less than or equal to 0.1 mass%.

Examples of the positive electrode active material include a lithium metal composite oxide containing transition metal elements such as Co, Mn, and Ni, and the like. Examples of the lithium metal composite oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These positive electrode active materials may be used alone or in combination of multiple types.

In addition, from the viewpoint that a high capacity of the non-aqueous electrolyte secondary battery can be achieved, it is preferable that the positive electrode active material contains a lithium nickel composite oxide of LiₐNiₓM_{y}O_{2-b} (where M is at least one element selected from Al, Co, Mn, Fe, Ti, Si, Nb, Mo, W, and Zn, 0 ≤ a < 1.05, 0.7 < x ≤ 0.95, 0 ≤ y ≤ 0.3, 0 ≤ b < 0.05, x + y = 1, and a varies according to charging and discharging). By using a positive electrode active material having a high nickel ratio as in the lithium nickel composite oxide, the capacity of the battery can be increased, but on the other hand, the heat generation of the battery during the internal short circuit tends to be increased. However, even when a positive electrode active material having a high nickel ratio is used, the heat generation of the battery during the internal short circuit can be effectively suppressed by reducing the content of the carbon nanotubes on the surface of the positive electrode 11 as in the present embodiment.

Examples of the binder include a fluorine-based resin such as polytetrafluoroethylene (PTFE) or polyvinylidene fluoride (PVdF), polyacrylonitrile (PAN), a polyimide-based resin, an acrylic resin, and a polyolefin-based resin. These materials may be used alone or in combination of two or more thereof.

An example of a method of manufacturing the positive electrode mixture layer 42 will be described. For example, a positive electrode mixture slurry for the lower half region 42a can be prepared by mixing a positive electrode active material, a binder, a conductive agent containing carbon nanotubes, and the like together with a solvent. In addition, separately from the above slurry, a positive electrode mixture slurry for the upper half region 42b is prepared by mixing a positive electrode active material, a binder, a conductive agent containing no or a small amount of carbon nanotubes, and the like with a solvent. The positive electrode mixture slurry for the lower half region 42a is applied to both surfaces of the positive electrode current collector 40, the coating film is dried, the positive electrode mixture slurry for the upper half region 42b is applied to the coating film obtained by the positive electrode mixture slurry for the lower half region 42a, and then the coating film is dried, such that the positive electrode mixture layer 42 can be formed. In the above method, although the positive electrode mixture slurry for the lower half region 42a is applied and dried and then the positive electrode mixture slurry for the upper half region 42b is applied, a method in which the positive electrode mixture slurry for the lower half region 42a is applied and then the positive electrode mixture slurry for the upper half region 42b is applied before drying may be used, and the positive electrode mixture slurry for the lower half region 42a and the positive electrode mixture slurry for the upper half region 42b may be simultaneously applied.

### [Negative Electrode]

The negative electrode 12 includes a negative electrode current collector and a negative electrode mixture layer provided on the negative electrode current collector. Examples of the negative electrode current collector include a foil of a metal stable in a potential range of the negative electrode, such as copper, and a film in which the metal is disposed on a surface layer.

It is preferable that the negative electrode mixture layer contains a negative electrode active material and further contains a binder or a conductive agent. The negative electrode 12 can be manufactured by preparing a negative electrode mixture slurry containing a negative electrode active material, a binder, and the like, applying the negative electrode mixture slurry onto the negative electrode current collector, performing drying to form the negative electrode mixture layer, and rolling the negative electrode mixture layer.

The negative electrode active material is capable of reversibly occluding and releasing lithium ions, and examples thereof include carbon materials such as natural graphite and artificial graphite, metals alloyed with lithium, such as silicon (Si) and tin (Sn), alloys containing metal elements such as Si and Sn, and composite oxides.

Examples of the binder include a fluorine-based resin, PAN, a polyimide-based resin, an acrylic resin, a polyolefin-based resin, styrene-butadiene rubber (SBR), carboxymethyl cellulose (CMC) or a salt thereof, polyacrylic acid (PAA) or a salt thereof (PAA-Na, PAA-K, and the like, or a partially neutralized salt may be used), and polyvinyl alcohol (PVA). These materials may be used alone or in combination of two or more thereof.

Examples of the conductive agent include carbon materials such as carbon black (CB), acetylene black (AB), Ketjenblack, carbon nanotubes (CNT), and graphite. These materials may be used alone or in combination of two or more thereof.

### [Separator]

For example, a porous sheet having an ion permeation property and an insulation property is used for the separator 13. Specific examples of the porous sheet include a fine porous thin film, a woven fabric, and a non-woven fabric. As a material of the separator, an olefin-based resin such as polyethylene or polypropylene, cellulose, and the like are preferable. The separator 13 may be a laminate including a cellulose fiber layer and a thermoplastic resin fiber layer formed of an olefin-based resin or the like. In addition, a multi-layer separator including a polyethylene layer and a polypropylene layer may be used, or a separator obtained by applying a material such as an aramid-based resin or ceramic to a surface of the separator may be used.

### [Non-Aqueous Electrolyte]

The non-aqueous electrolyte contains a non-aqueous solvent and an electrolyte salt dissolved in the non-aqueous solvent. As the non-aqueous solvent, for example, esters, ethers, nitriles such as acetonitrile, amides such as dimethylformamide, a mixed solvent of two or more thereof, and the like can be used. The non-aqueous solvent may contain a halogen-substituted product in which at least some hydrogens in these solvents are substituted with halogen atoms such as fluorine.

Examples of the esters include cyclic carbonates such as ethylene carbonate (EC), propylene carbonate (PC), and butylene carbonate, chain carbonates such as dimethyl carbonate (DMC), ethyl methyl carbonate (EMC), diethyl carbonate (DEC), methyl propyl carbonate, ethyl propyl carbonate, and methyl isopropyl carbonate, cyclic carboxylic acid esters such as γ-butyrolactone and γ-valerolactone, and chain carboxylic acid esters such as methyl acetate, ethyl acetate, propyl acetate, methyl propionate (MP), and ethyl propionate.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ether, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

As the halogen-substituted product, fluorinated cyclic carbonate ester such as fluoroethylene carbonate (FEC), fluorinated chain carboxylic acid ester such fluorinated chain carbonate ester or methyl fluoropropionate (FMP), and the like are preferably used.

The electrolyte salt is preferably a lithium salt. Examples of the lithium salt include borates such as LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, n is 1 or 2), LiB₁₀Cl₁₀, LiCl, LiBr, LiI, lithium chloroborane, lithium lower aliphatic carboxylate, Li₂B₄O₇, and Li(B(C₂O₄)F₂), and imide salts such as LiN(SO₂CF₃)₂ and LiN(C₁F₂ₗ₊₁SO₂)(CₘF₂ₘ₊₁SO₂) {1 and m are integers greater than or equal to 1}. These lithium salts may be used alone or in combination of multiple types. Among them, LiPF₆ is preferably used from the viewpoint of ion conductivity, electrochemical stability, and the like. A concentration of the lithium salt is preferably greater than or equal to 0.8 mol and less than or equal to 1.8 mol per 1 L of the solvent.

### EXAMPLES

Hereinafter, the present disclosure will be further described with reference to Examples, but the present disclosure is not limited to these Examples.

### (Example 1)

Nickel sulfate, cobalt sulfate, and aluminum sulfate were mixed in an aqueous solution at a molar ratio of 87:9:4, and the mixture was coprecipitated, thereby obtaining (Ni,Co,Al)(OH)₂ as a precursor material. Thereafter, the precursor material and lithium hydroxide monohydrate (LiOH·H₂O) were mixed at a molar ratio of 1:1.03. The mixed powder was fired in an electric furnace under an oxygen atmosphere at 750°C for 12 hours to obtain a positive electrode active material.

The positive electrode active material, carbon nanotubes, and polyvinylidene fluoride were mixed so that a mass ratio of the carbon nanotubes to the positive electrode active material was 0.05 mass%, and an appropriate amount of N-methylpyrrolidone (NMP) was added to the mixture, thereby preparing a slurry. This slurry was used as a positive electrode mixture slurry A.

In addition, the positive electrode active material, carbon nanotubes, and polyvinylidene fluoride were mixed so that a mass ratio of the carbon black to the positive electrode active material was 1.0 mass%, and an appropriate amount of N-methylpyrrolidone (NMP) was added to the mixture, thereby preparing a slurry. This slurry was used as a positive electrode mixture slurry B.

The positive electrode mixture slurry A was applied to both surfaces of an aluminum foil having a thickness of 15 µm, the positive electrode mixture slurry A was dried to form a first coating film, the positive electrode mixture slurry B was applied onto the first coating film, and then the positive electrode mixture slurry B was dried to form a second coating film. Thereafter, the coating film was rolled by a rolling roller to manufacture a positive electrode in which a positive electrode mixture layer was formed on both surfaces of a positive electrode current collector. A thickness ratio of the first coating film to the second coating film was 75:25.

When calculated from the composition, thickness ratio, and the like of the slurry, in a case where the positive electrode mixture layer was divided into two equal parts in a thickness direction, a mass ratio of the carbon nanotubes to the positive electrode active material contained in a lower half region on a side of the positive electrode current collector was 0.05 mass%, and a mass ratio of the carbon black to the positive electrode active material contained in the lower half region on the side of the positive electrode current collector was 0 mass%. In addition, in the case where the positive electrode mixture layer was divided into two equal parts in the thickness direction, a mass ratio of the carbon nanotubes to the positive electrode active material contained in an upper half region on the side of the surface was 0.025 mass%, and a mass ratio of the carbon black to the positive electrode active material contained in the upper half region on the side of the surface was 0.5 mass%.

### [Manufacturing of Negative Electrode]

Graphite, a sodium salt of carboxymethylcellulose, and a styrene-butadiene copolymer were mixed so that a mass ratio was 98:1:1, and the mixture was kneaded with water, thereby preparing a negative electrode mixture slurry. The negative electrode mixture slurry was applied to both surfaces of a copper foil having a thickness of 8 µm, the coating film was dried, and then the dried coating film was rolled by a rolling roller, thereby manufacturing a negative electrode in which a negative electrode mixture layer was formed on both surfaces of a negative electrode current collector.

### [Manufacturing of Non-Aqueous Electrolyte]

LiPF₆ was dissolved in a mixed solvent composed of ethylene carbonate (EC) and methylethyl carbonate (MEC) (EC : MEC = 1 : 3 by volume ratio) at a concentration of 1 mol/L. This was used as a non-aqueous electrolyte.

### [Manufacturing of Secondary Battery]

(1) A separator (a composite film of polyethylene and polypropylene) having a thickness of 20 µm was wound between the positive electrode and the negative electrode to manufacture a wound electrode assembly. A lead was attached to each of the positive electrode and the negative electrode.
(2) The electrode assembly was inserted into a case body, the lead of the negative electrode was welded to the bottom of the case body, and the lead of the positive electrode was welded to a sealing assembly.
(3) A non-aqueous electrolyte was injected into the case body, and then an end part of an opening of the case body was caulked with the sealing assembly via a gasket. This was used as a non-aqueous electrolyte secondary battery.

### <Example 2>

A non-aqueous electrolyte secondary battery was manufactured in the same manner as that of Example 1, except that a thickness ratio of the first coating film to the second coating film was 95:5. In the case where the positive electrode mixture layer was divided into two equal parts in the thickness direction, a mass ratio of the carbon nanotubes to the positive electrode active material contained in the lower half region on the side of the positive electrode current collector was 0.05 mass%, and a mass ratio of the carbon black to the positive electrode active material contained in the lower half region on the side of the positive electrode current collector was 0 mass%. In addition, in the case where the positive electrode mixture layer was divided into two equal parts in the thickness direction, a mass ratio of the carbon nanotubes to the positive electrode active material contained in the upper half region on the side of the surface was 0.045 mass%, and a mass ratio of the carbon black to the positive electrode active material contained in the upper half region on the side of the surface was 0.1 mass%.

### <Example 3>

A non-aqueous electrolyte secondary battery was manufactured in the same manner as that of Example 1, except that a thickness ratio of the first coating film to the second coating film was 50:50. In the case where the positive electrode mixture layer was divided into two equal parts in the thickness direction, a mass ratio of the carbon nanotubes to the positive electrode active material contained in the lower half region on the side of the positive electrode current collector was 0.05 mass%, and a mass ratio of the carbon black to the positive electrode active material contained in the lower half region on the side of the positive electrode current collector was 0 mass%. In addition, in the case where the positive electrode mixture layer was divided into two equal parts in the thickness direction, a mass ratio of the carbon nanotubes to the positive electrode active material contained in the upper half region on the side of the surface was 0 mass%, and a mass ratio of the carbon black to the positive electrode active material contained in the upper half region on the side of the surface was 1 mass%.

### <Example 4>

A non-aqueous electrolyte secondary battery was manufactured in the same manner as that of Example 1, except that a thickness ratio of the first coating film to the second coating film was 25:75. In the case where the positive electrode mixture layer was divided into two equal parts in the thickness direction, a mass ratio of the carbon nanotubes to the positive electrode active material contained in the lower half region on the side of the positive electrode current collector was 0.025 mass%, and a mass ratio of the carbon black to the positive electrode active material contained in the lower half region on the side of the positive electrode current collector was 0.5 mass%. In addition, in the case where the positive electrode mixture layer was divided into two equal parts in the thickness direction, a mass ratio of the carbon nanotubes to the positive electrode active material contained in the upper half region on the side of the surface was 0 mass%, and a mass ratio of the carbon black to the positive electrode active material contained in the upper half region on the side of the surface was 1 mass%.

### <Comparative Example 1>

A non-aqueous electrolyte secondary battery was manufactured in the same manner as that of Example 1, except that a thickness ratio of the first coating film to the second coating film was 100:0. In the case where the positive electrode mixture layer was divided into two equal parts in the thickness direction, a mass ratio of the carbon nanotubes to the positive electrode active material contained in the lower half region on the side of the positive electrode current collector was 0.05 mass%, and a mass ratio of the carbon black to the positive electrode active material contained in the lower half region on the side of the positive electrode current collector was 0 mass%. In addition, in the case where the positive electrode mixture layer was divided into two equal parts in the thickness direction, a mass ratio of the carbon nanotubes to the positive electrode active material contained in the upper half region on the side of the surface was 0.05 mass%, and a mass ratio of the carbon black to the positive electrode active material contained in the upper half region on the side of the surface was 0 mass%.

### <Comparative Example 2>

A non-aqueous electrolyte secondary battery was manufactured in the same manner as that of Example 1, except that a thickness ratio of the first coating film to the second coating film was 0:100. In the case where the positive electrode mixture layer was divided into two equal parts in the thickness direction, a mass ratio of the carbon nanotubes to the positive electrode active material contained in the lower half region on the side of the positive electrode current collector was 0 mass%, and a mass ratio of the carbon black to the positive electrode active material contained in the lower half region on the side of the positive electrode current collector was 1 mass%. In addition, in the case where the positive electrode mixture layer was divided into two equal parts in the thickness direction, a mass ratio of the carbon nanotubes to the positive electrode active material contained in the upper half region on the side of the surface was 0 mass%, and a mass ratio of the carbon black to the positive electrode active material contained in the upper half region on the side of the surface was 1 mass%.

### [Measurement of Battery Capacity]

The non-aqueous electrolyte secondary battery of each Example and each Comparative Example was subjected to constant current charge at a maximum current value of 0.3 It in a temperature environment of 25°C until a voltage reached 4.2 V, and then was subjected to constant voltage charge at 4.2 V until a current value was decreased to 0.05 It. Thereafter, a discharge end voltage was set to 2.5 V, and a constant current discharge was performed at a current of 0.2 It. The discharge capacity at this time was measured. In Table 1, the discharge capacities of the other Examples and Comparative Examples with respect to the standard (100) of the discharge capacity of Comparative Example 1 as relative values are shown.

### [Measurement of Output]

The non-aqueous electrolyte secondary battery of each Example and each Comparative Example was subjected to constant current charge at a maximum current value of 0.3 It in a temperature environment of 25°C until a voltage reached 4.2 V, and then was subjected to constant voltage charge at 4.2 V until a current value was decreased to 0.05 It. Thereafter, the battery was discharged at 1.0 It for 30 seconds, and the amount of electric energy (output) was measured. In Table 1, the outputs of the other Examples and Comparative Examples with respect to the standard (100) of the output of Comparative Example 1 as relative values are shown.

### [Measurement of Battery Temperature during Internal Short Circuit]

The non-aqueous electrolyte secondary battery of each Example and each Comparative Example was charged at a constant current of 0.3 It in a temperature environment of 25°C until a voltage reached 4.2 V, and then was charged at a constant voltage of 4.2 V until a current value reached 0.05 It. Next, each battery was disposed on a concrete block, a round bar having a diameter of 15,8 mm was disposed on the battery so as to cross the axial center portion of the battery, a weight having a weight of 9.1 kg was dropped from a height of 61 cm right above the battery onto the round bar to cause an internal short circuit of the battery, and the maximum arrival temperature of the battery surface at this time was measured. In Table 1, the maximum arrival temperatures of the other Examples and Comparative Examples with respect to the standard (100) of the maximum arrival temperature of Comparative Example 1 as relative values are shown.

**[Table 1]**

| | Mass ratio of carbon nanotubes (mass%) | | Mass ratio of carbon black (mass%) | | Capacity | Output | Maximum arrival temperature |
|---|---|---|---|---|---|---|---|
| | Lower half region | Upper half region | Lower half region | Upper half region | | | |
| Example 1 | 0.05 | 0.025 | 0 | 0.5 | 95.1 | 95.6 | 42.4 |
| Example 2 | 0.05 | 0.045 | 0 | 0.1 | 98.4 | 96.9 | 42.9 |
| Example 3 | 0.05 | 0 | 0 | 1 | 90.4 | 89.4 | 38.1 |
| Example 4 | 0.025 | 0 | 0.5 | 1 | 76.8 | 70.1 | 36.4 |
| Comparative Example 1 | 0.05 | 0.05 | 0 | 0 | 100 | 100 | 100 |
| Comparative Example 2 | 0 | 0 | 1 | 1 | 71.5 | 65.6 | 31.5 |

In Comparative Example 2 in which carbon nanotubes were not contained, heat generation during the internal short circuit was suppressed as compared with Comparative Example 1 in which the carbon nanotubes were uniformly contained in the positive electrode mixture layer, but the capacity and output of the battery were considerably reduced as compared with Comparative Example 1. On the other hand, in the case where the positive electrode mixture layer was divided into two equal parts in the thickness direction, in Examples 1 to 4 in which the mass ratio of the carbon nanotubes to the positive electrode active material contained in the upper half region on the side of the surface was smaller than the mass ratio of the carbon nanotubes to the positive electrode active material contained in the lower half region on the side of the positive electrode current collector, the heat generation during the internal short circuit was suppressed as compared with Comparative Example 1, and the battery capacity and output of the battery were decreased as compared with Comparative Example 1, but the degree of reduction was suppressed as compared with Comparative Example 2.

### REFERENCE SIGNS LIST

- 10: Non-aqueous electrolyte secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 40: Positive electrode current collector
- 42: Positive electrode mixture layer
- 42a: Lower half region
- 42b: Upper half region

## Claims

1. A positive electrode for a non-aqueous electrolyte secondary battery, comprising:
a positive electrode current collector; and
a positive electrode mixture layer that is provided on the positive electrode current collector and contains a positive electrode active material and a conductive agent,
wherein the conductive agent contains carbon nanotubes, and
in a case where the positive electrode mixture layer is divided into two equal parts in a thickness direction, a mass ratio of the carbon nanotubes to the positive electrode active material contained in an upper half region on a side of a surface is smaller than a mass ratio of the carbon nanotubes to the positive electrode active material contained in a lower half region on a side of the positive electrode current collector.

2. The positive electrode for a non-aqueous electrolyte secondary battery according to claim 1, wherein the positive electrode active material contains a lithium nickel composite oxide of a general formula of LiₐNiₓM_{y}O_{2-b} (where M is at least one element selected from Al, Co, Mn, Fe, Ti, Si, Nb, Mo, W, and Zn, 0 ≤ a < 1.05, 0.7 < x ≤ 0.95, 0 ≤ y ≤ 0.3, 0 ≤ b < 0.05, and x + y = 1).

3. The positive electrode for a non-aqueous electrolyte secondary battery according to claim 1 or 2, wherein the mass ratio of the carbon nanotubes to the positive electrode active material contained in the upper half region on the side of the surface is less than or equal to 0.05 mass%.

4. The positive electrode for a non-aqueous electrolyte secondary battery according to any one of claims 1 to 3, wherein the mass ratio of the carbon nanotubes to the positive electrode active material contained in the lower half region on the side of the positive electrode current collector is greater than or equal to 0.01 mass% and less than or equal to 1 mass%.

5. The positive electrode for a non-aqueous electrolyte secondary battery according to any one of claims 1 to 4, wherein a mass ratio of the carbon nanotubes to the positive electrode active material contained in the positive electrode mixture layer is greater than or equal to 0.005 mass% and less than or equal to 0.5 mass%.

6. The positive electrode for a non-aqueous electrolyte secondary battery according to any one of claims 1 to 5, wherein the conductive agent contains a particulate conductive agent,
a mass ratio of the particulate conductive agent to the positive electrode active material contained in the upper half region on the side of the surface is greater than or equal to 0.05 mass% and less than or equal to 1.2 mass%, and
a mass ratio of the particulate conductive agent to the positive electrode active material contained in the lower half region on the side of the positive electrode current collector is less than or equal to 0.5 mass%.

7. A non-aqueous electrolyte secondary battery comprising a positive electrode, a negative electrode, and a non-aqueous electrolyte,
wherein the positive electrode is the positive electrode for a non-aqueous electrolyte secondary battery according to any one of claims 1 to 6.
